# EUROPEAN PATENT APPLICATION

(11) **EP 4 803 884 A1**
(43) Date of publication of application: **09.09.2026**
(21) Application number: 25305283.1
(22) Date of filing: 03.03.2025
(51) Int. Cl.: G01N 21/552, G01N 21/77, G02B 6/122

(54) **PROCESS FOR MANUFACTURING A PLASMONIC MULTIMODE WAVEGUIDE SENSOR COMPRISING A PHOTOPOLYMERIZED MOLECULAR IMPRINTED POLYMER NANOLAYER**

(71) Applicant: Università degli Studi della Campania "Luigi Vanvitelli", 81100 Caserta (CE) (IT); Université de Haute Alsace, 68200 Mulhouse (FR); Centre National de la Recherche Scientifique, 75016 Paris (FR)
(72) Inventor: SOPPERA, Olivier, 68100 MULHOUSE (FR); KHITOUS, Amine, 68100 MULHOUSE (FR); CENNAMO, Nunzio, 80020 CRISPANO (IT); ARCADIO, Francesco, 81043 CAPUA (IT)
(74) Representative: Cabinet Becker et Associés

(57) **Abstract**

The invention relates to a process for manufacturing a plasmonic multimode waveguide sensor comprising an *in situ* photopolymerized molecular imprinted polymer nanolayer. The invention further relates to a multimode waveguide sensor obtained by the process of the invention, and to its use for adsorbing, detecting, identifying and/or quantifying at least one analyte in a matrix.

## Description

### TECHNICAL FIELD

The invention relates to a process for manufacturing a plasmonic multimode waveguide sensor comprising an *in situ* photopolymerized molecular imprinted polymer nanolayer.

### TECHNICAL BACKGROUND

Sensitivity, specificity and detection dynamics have always been major challenges in the manufacture of chemical sensors. Among these sensors, plasmonic sensors have been widely used and have reached high levels of sensitivity. This performance is attributed to their sensitivity to small changes in refractive index (RI) in the near-field (NF), especially in surface plasmon resonance (SPR) configuration. However, the functionalization of plasmonic surfaces remains a critical step for creating robust and effective recognition sites. One of the challenges is the control of the thickness of the functional layer at the nanoscale. In order to obtain highly sensitive and selective sensors, it is actually desirable to work with very thin functional layers, preferably positioned at the most sensitive areas of the sensors. This would ensure an optimal coupling of the molecule to be detected with the metal layer, and thus a high sensitivity of the device.

EP 3 502 152 and Cennamo et al. Biosensors 2021, 11, 72 disclose the manufacture of a device comprising a molecularly imprinted polymer (MIP) layer coated onto a gold (Au) layer, which is itself deposited onto the surface of a plastic optical fiber (POF), also referred to as a POF@Au@MIP device. The molecularly imprinted polymer is coated onto the gold layer either by pre-forming MIP nanoparticles and grafting them onto the gold surface as a film, or by depositing a premixture comprising the MIP precursors on the gold layer via spin-coating techniques, and heating said deposited premixture at 70 or 80°C for a duration of 14 to 16 hours. This process ensures a satisfactory coating of the MIP on the gold layer. However, it neither allows for precise control of the MIP layer's thickness nor for selective deposition of the MIP onto specific areas of the gold layer. Additionally, the heating process may affect the stability of the MIP complex, potentially compromising the integrity of the recognition sites after polymerization.

Soppera et al. Sensors 2023, 23, 3995 discloses the synthesis of gold nanoparticles covered with a MIP nanolayer by photopolymerization. Gold nanoparticles do not allow LSPR (Localized Surface Plasmon Resonance) sensing with a sufficient sensitivity. SERS (Surface Enhanced Raman Spectroscopy) is another suitable technique. However, in order to reach high sensitivity, spectroscopically resonant molecules are required, which limits the scope of the detectable molecules. Such system does thus not allow highly sensitive detection of any target molecule.

Thus, there remains a need to provide a process for manufacturing highly sensitive and highly specific sensors. Advantageously, the sensors should be suitable for detecting a wide range of target molecules.

### SUMMARY OF THE INVENTION

In this respect, the inventors have evidenced that it was possible to obtain highly sensitive sensors by photopolymerizing molecularly imprinted polymers onto a metal surface of a plasmonic multimode waveguide. The MIP is polymerized *in situ* through the enhancement of near-field light induced by injecting light via the plasmonic multimode waveguide. The unique feature of this approach lies in its broad SPR band, excitable by white light, offering a wide selection of photoinitiators. In addition, the process allows finely controlling thickness of the MIP layer at a nanometric scale by irradiation time and/or power in order to change the detection range of the sensor. In particular, the process may take advantage of an intermediate buffer layer (e.g., photoresist Microposit S1813, Metal Oxides, or other thin films with refractive indices major than the core of the waveguide) in a plasmonic multimode waveguide sensor to photopolymerize an MIP receptor layer with ultra-fine thickness control and to optimize the sensing properties. The possibility to finely tune the MIP thickness allows to tailor the binding sensitivity of the sensor, thus the detection range of the analyte of interest with regards to the specific application. In particular, the proposed advantages exploit the multimode waveguides characteristics and the buffer layer of the plasmonic platforms.

Thus, the present invention relates to a process for manufacturing a plasmonic multimode waveguide sensor, comprising the steps of
a) providing a plasmonic multimode waveguide comprising an intermediate buffer layer and a metallic layer coated onto at least part of the intermediate buffer layer, and
b) polymerizing at least one molecularly imprinted polymer layer on at least part of the surface of the metallic layer of the plasmonic multimode waveguide by photopolymerization.

In some embodiments, the plasmonic multimode waveguide is a plastic optical fiber, preferably a D-shaped plastic optical fiber.

In some embodiments, the photopolymerization is plasmon near-field photopolymerization, implemented by injecting light into the plasmonic multimode waveguide.

In some embodiments, the intermediate buffer layer is selected from the group consisting of a dielectric layer, such as a photoresist buffer layer, a metal oxide layer and a metal oxide multilayer, the metals oxides being preferably TiO₂ and/or ZrO₂.

In some embodiments, the metallic layer is a gold layer, preferably a gold nanofilm.

In some embodiments, the photopolymerization is implemented by photopolymerization of a photosensitive formulation comprising MIP precursors.

In some embodiments, the photosensitive formulation comprises at least one complexing monomer, at least one cross-linking monomer, at least one molecular target and at least one photoinitiator.

In some embodiments,
- the at least one cross-linking monomers comprises pentaerythritol triacrylate (PETA), ethylene glycol dimethyl acrylate (EGDMA) or a mixture thereof;
- the at least one complexing monomer comprises methacrylic acid;
- the at least one molecular target comprises methylene blue, testosterone, per- and polyfluoroalkyl substances (PFAS) such as perfluorooctanoic acid or (S)-propranolol; and
- the at least one photoinitiator comprises bis(cyclopentadienyl)titanium(IV) dichloride (TT).

In some embodiments, the photosensitive formulation is selected from the following formulations:
- TT/EGDMA/methylene blue/PETA/MAA/2,2,2 trifluoroethyl methacrylate (TFEMA), preferably with the following respective weight percentages: 1.13/21.61/0.23/11.40/19.00/45.50;
- TT/EGDMA/testosterone/PETA/MAA/TFEMA, preferably with the following respective weight percentages: 1.50/20.60/0.56/11.40/20.44/45.50; and
- TT/EGDMA/Propranolol/PETA/MAA/TFEMA, preferably with the following respective weight percentages: 1.46/20.60/0.60/11.39/21.33/44.62.

In some embodiments, the thickness of the molecularly imprinted polymer layer is lower than 150 nm.

Another object of the invention is a plasmonic multimode waveguide sensor, preferably a plastic optical fiber sensor, obtainable, preferably obtained, by a process according to the invention.

Another object of the invention is a plasmonic multimode waveguide sensor, preferably a plastic optical fiber sensor, comprising a plasmonic multimode waveguide comprising an intermediate buffer layer, a metallic layer coated on at least part of the intermediate buffer layer, and a layer of a molecularly imprinted polymer arranged onto at least part of the metallic layer, wherein the thickness of the layer of the molecularly imprinted polymer is lower than 150 nm.

Another object of the invention is a process for controlling the thickness of a MIP layer deposited on at least part of the metallic layer of a plasmonic multimode waveguide, comprising a step of photopolymerization of a photosensitive formulation preferably comprising at least one complexing monomer, at least one cross-linking monomer, at least one photoinitiator and at least one molecular target, wherein the photopolymerization is preferably plasmon near-field photopolymerization, implemented by injecting light into the plasmonic multimode waveguide.

Another object of the invention is the use of a plasmonic multimode waveguide sensor according to the invention for adsorbing, detecting, identifying and/or quantifying at least one analyte in a matrix, wherein the concentration of the at least one analyte in the matrix is preferably comprised between 1 aM and 100 nM.

A last object of the invention is a process for adsorbing, detecting, identifying and/or quantifying at least one analyte in a matrix, preferably a liquid matrix, comprising the steps of:
a1) providing a plasmonic multimode waveguide sensor according to the invention,
b1) placing the plasmonic multimode waveguide sensor in contact with the matrix,
c1) detecting at least one output signal transmitted by the plasmonic multimode waveguide sensor, and
d1) determining the presence of the at least one analyte in the matrix based on the at least one output signal detected at step c1).

### FIGURES

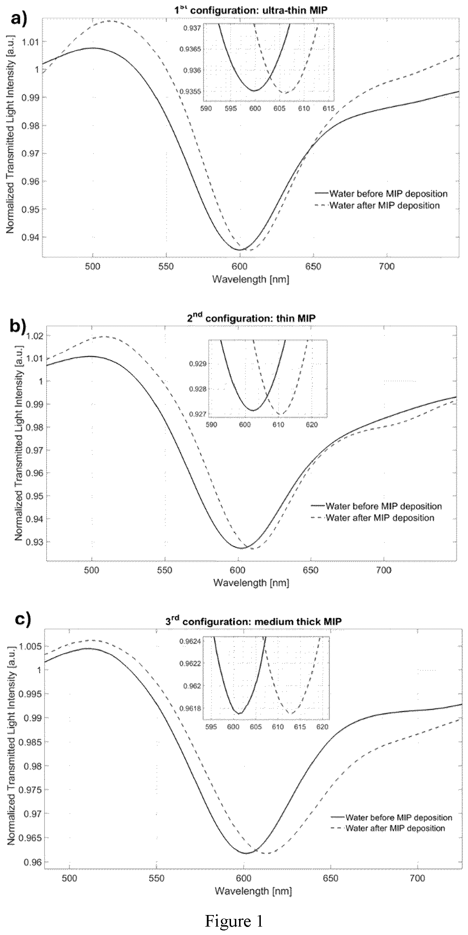

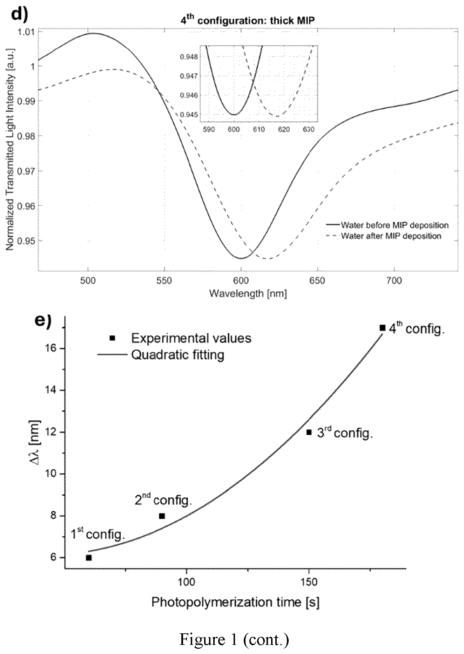

**Figure 1****:** Normalized transmitted spectra for the 4 configurations of example 1 before and after integration of MIP layer: **(a)** Ultra-thin MIP-1 minute irradiation time, **(b)** Thin MIP-1 minute 30 seconds irradiation time, **(c)** Medium-thick MIP-2 minutes 30 seconds irradiation time, and **(d)** Thick MIP-3 minutes irradiation time. **(e)** Summary of SPR shift in different configurations as a function of irradiation time at a constant power density of about 9 mW/cm².

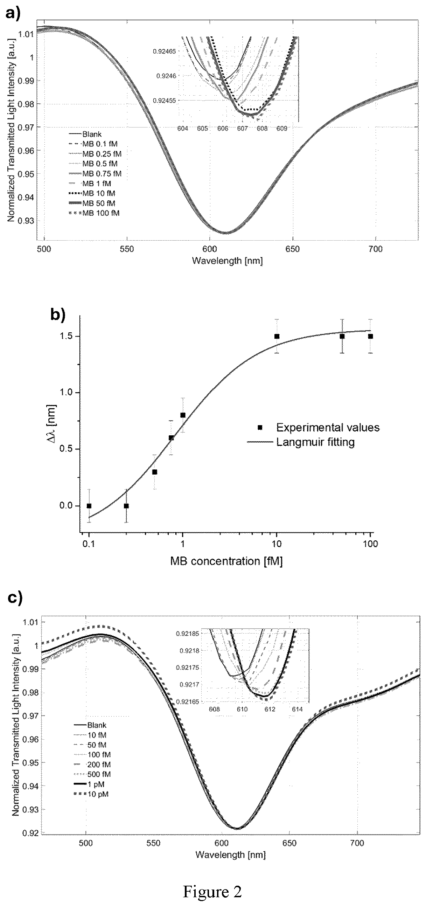

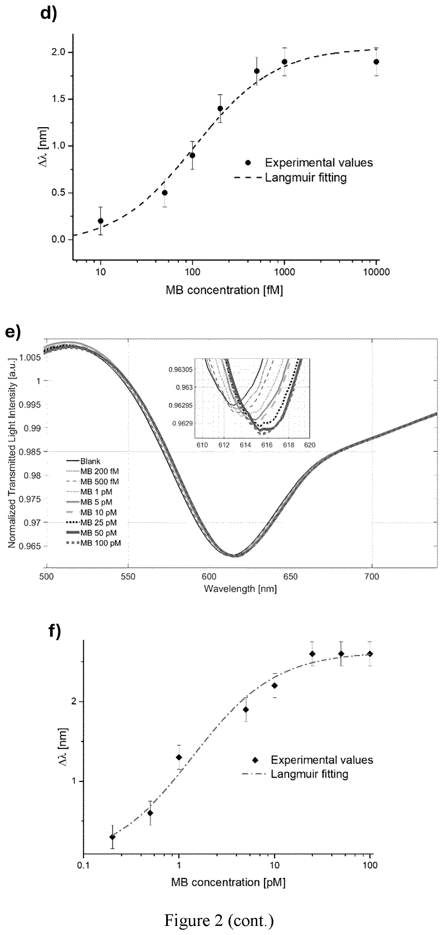

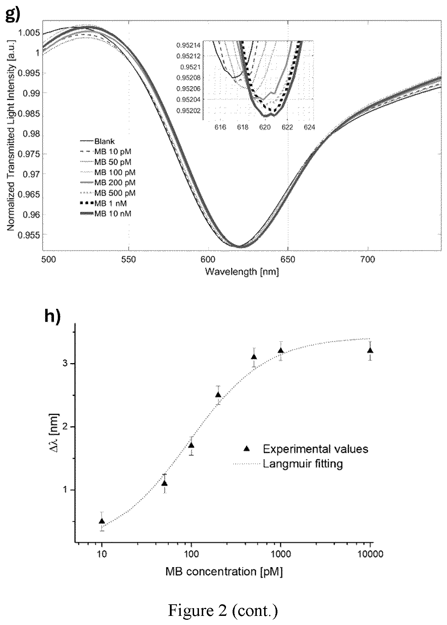

**Figure 2****:** Normalized transmitted spectra for the 4 configurations of example 1 in presence of different concentrations of methylene blue (MB) - 1^{st} configuration: **(a)** MB recognition as a function of MB concentration in the range [0.10-100 fM], **(b)** Summary of MB recognition: SPR shift versus [MB] and Langmuir fitting of the results. Second configuration: **(c)** Study of MIP-MB recognition as a function of MB concentration in the range [10 fM-10 pM], **(d)** Summary of MB recognition: SPR shift versus [MB] and Langmuir fitting. 3^{rd} Configuration: **(e)** Study of MIP-MB recognition as a function of MB concentration in the range [200 fM-100 pM], **(f)** Summary of MB recognition: SPR shift versus [MB] and Langmuir fitting. 4^{th} configuration: **(g)** Study of MIP-MB recognition as a function of MB concentration in the range [10 pM-10 nM], (h) Summary of MB recognition: SPR shift versus [MB] and Langmuir fitting.

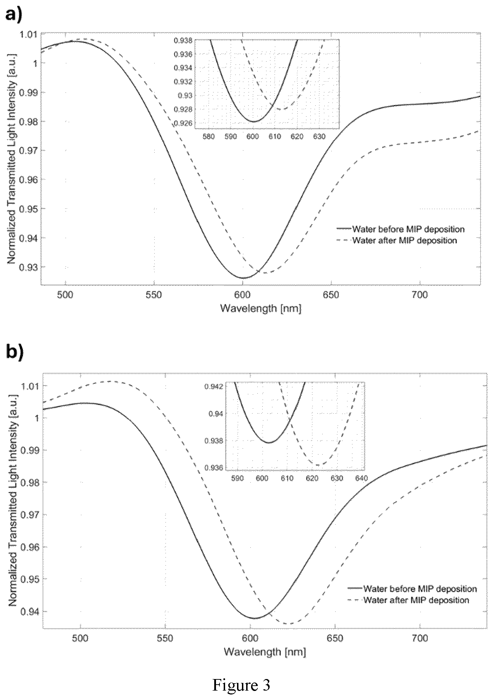

**Figure 3****:** Normalized transmitted spectra for the 2 configurations of example 2 before and after integration of MIP layer: **(a)** Thin MIP, **(b)** Thick MIP.

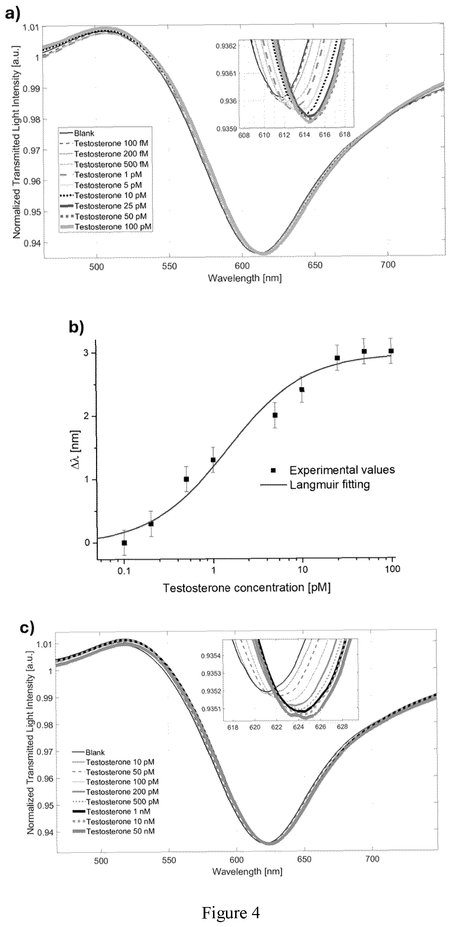

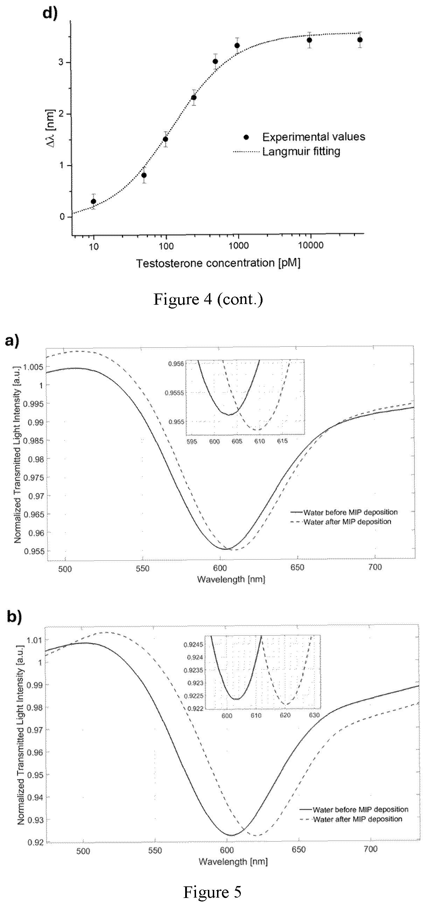

**Figure 4****:** Normalized transmitted spectra for the 2 configurations of example 2 in presence of different concentrations of testosterone - First configuration (thin film): **(a)** SPR spectra obtained for testosterone recognition in water as a function of its concentration in the range [100 fM-100 pM], **(b)** Summary of testosterone recognition: SPR shift as a function of [testosterone] and Langmuir fitting of the experimental values. Second configuration (thick film): **(c)** SPR spectra obtained for testosterone recognition in water as a function of its concentration in the range [10 pM-50 nM], **(d)** Summary of testosterone recognition: SPR shift as a function of [testosterone] and Langmuir fitting of the experimental values.
**Figure 5****:** SPR spectra in water before and after irradiation for both configurations of example 3.

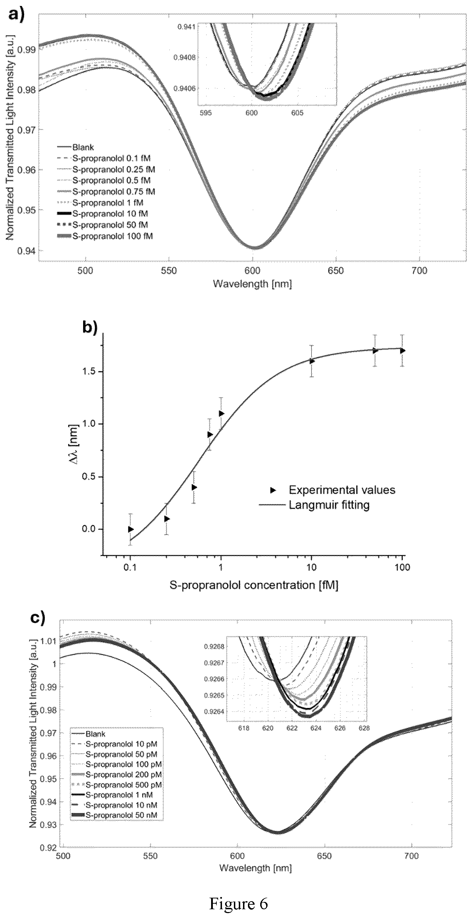

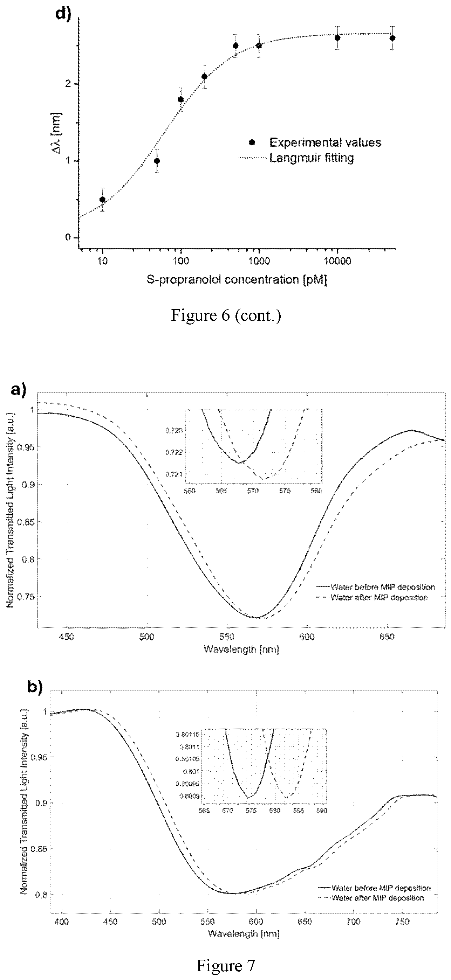

**Figure 6** : Normalized transmitted spectra for the 2 configurations of example 2 in presence of different concentrations of S-propranolol - First configuration (ultrathin film - 28.4 nm): **(a)** Recognition of S-propranolol as a function of its concentration in the range [100 attoM-100 fM], **(b)** Summary of recognition of S-propranolol: SPR shift depending on [S-propranolol]. Second configuration (thin film - 41.5 nm): **(c)** Recognition of S-propranolol as a function of its concentration in the range [10 pM-50 nM], **(d)** Summary of S-propranolol recognition: SPR shift as a function of [S-propranolol].
**Figure 7****:** Normalized transmitted spectra for the 2 configurations of example 4 before and after integration of MIP layer: **(a)** neck configuration, **(b)** bowl configuration.

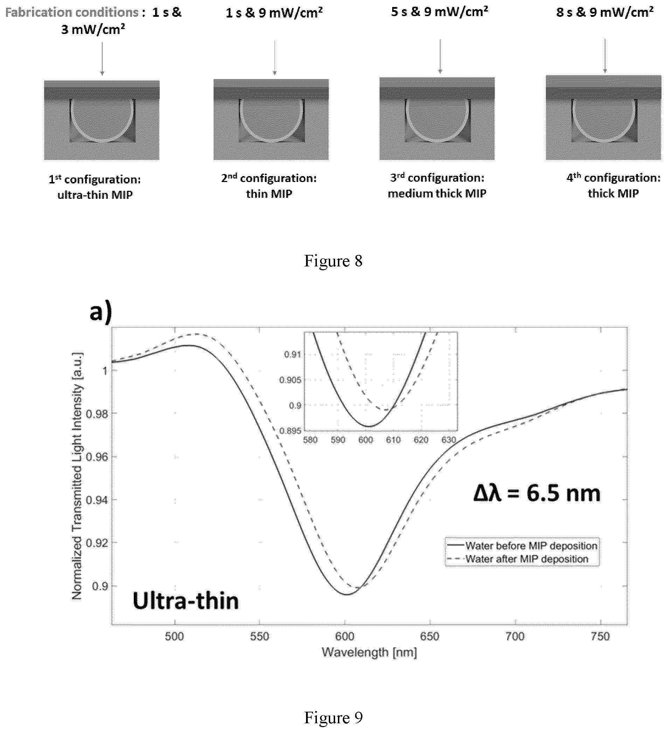

**Figure 8****:** schematic representation of the four MIP configurations used in detection of example 5, illustrating the control of MIP thickness by irradiation power and time.

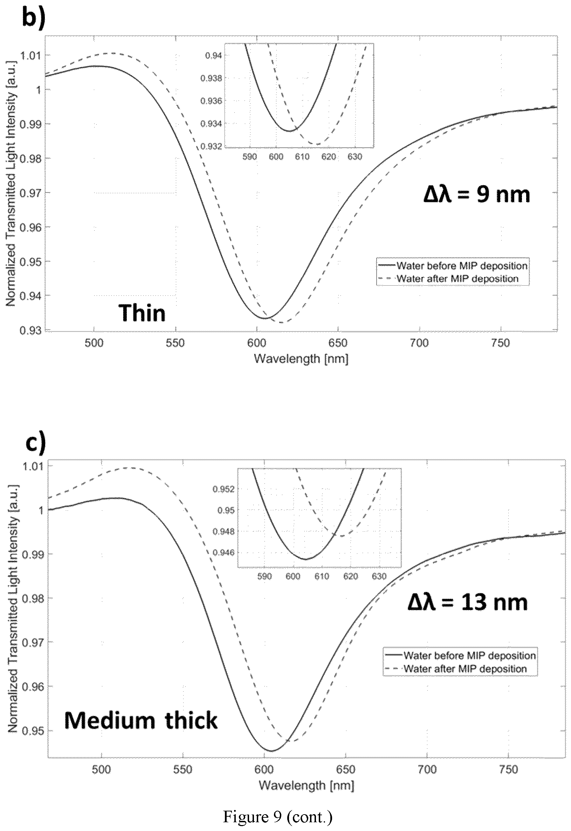

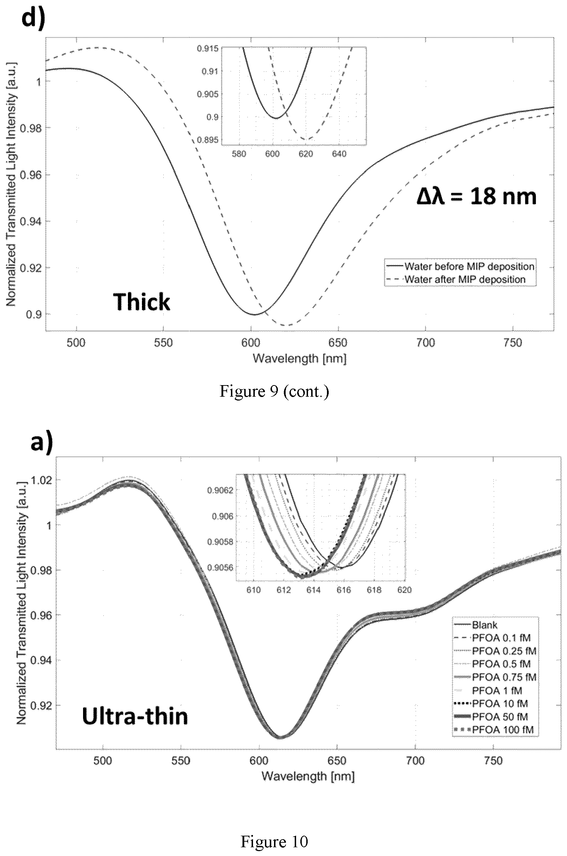

**Figure 9****:** SPR spectra before and after near-field photopolymerization of the MIP of example 5, showing the shift of the SPR band as a function of MIP thickness, labeled as: **(a)** ultra-thin MIP layer, **(b)** thin MIP layer, **(c)** medium thick MIP layer, and **(d)** thick MIP layer.

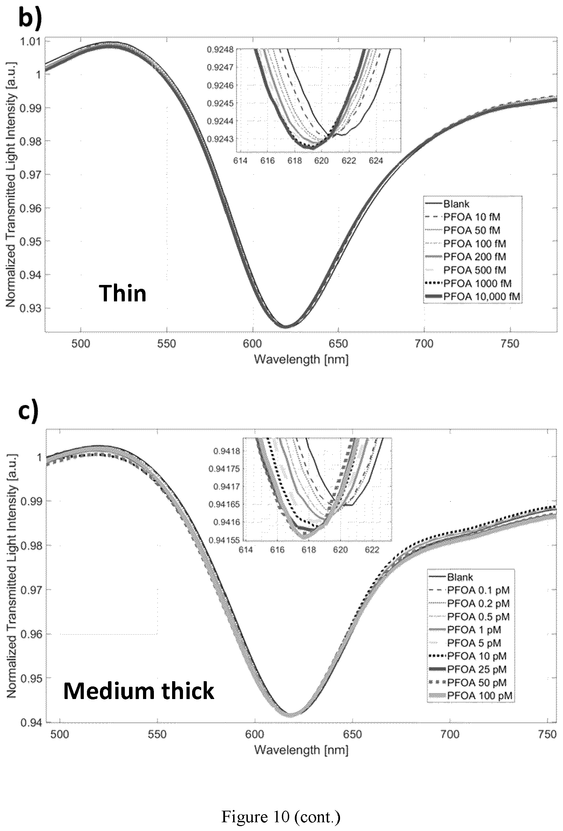

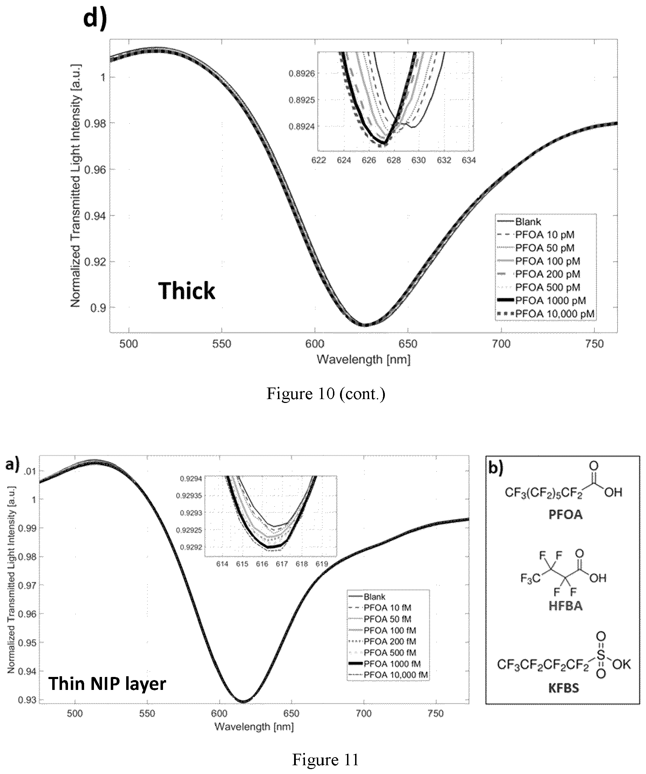

**Figure 10****:** SPR spectra of the four configurations of example 5 in different ranges of PFOA concentration: **(a)** ultra-thin MIP layer, range 0.1 fM-100 fM, **(b)** thin MIP layer, range 10 fM-10 pM, **(c)** medium thick MIP layer, range 0.1 pM-100 pM, and **(d)** thick MIP layer, range 10 pM-10 nM.

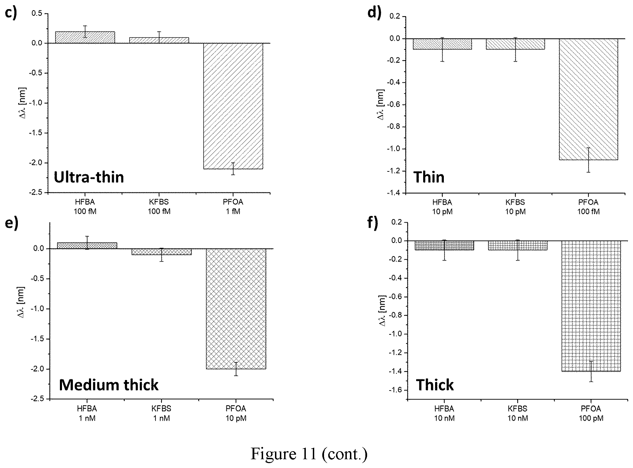

**Figure 11**: **(a)** Study of selectivity in recognition by the NIP under PFOA incubation in example 5, and by the four configurations incubated with two different analogs (KFBS) and (HFBA) **(b)** at 100-fold higher concentrations: **(c)** ultra-thin MIP layer, **(d)** thin MIP layer, **(e)** medium thick MIP layer, and **(f)** thick MIP layer.

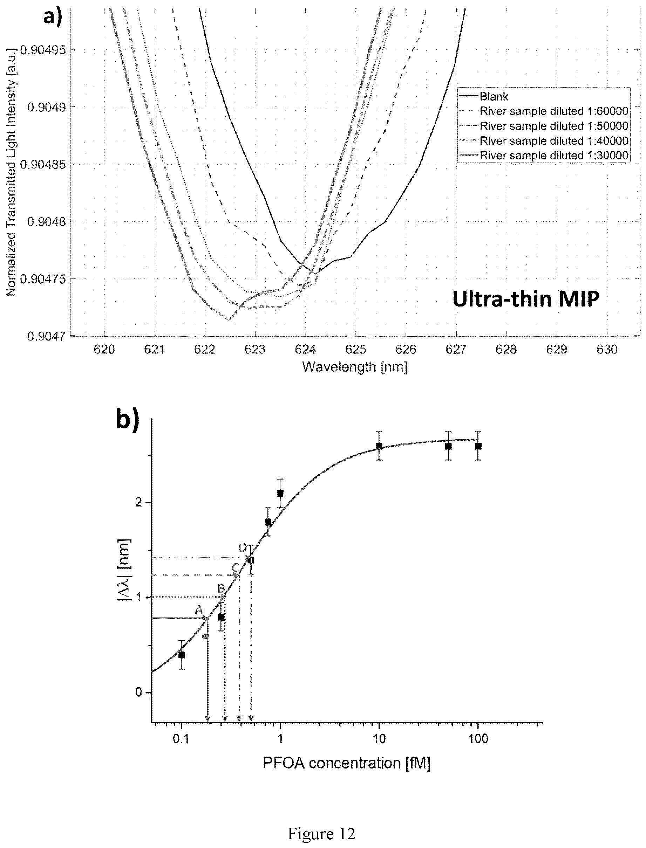

**Figure 12****:** Study of PFOA recognition in water from the Mulhouse river using the ultra-thin MIP configuration in example 5: **(a)** SPR spectra showing the shift in the SPR band as a function of river water dilution and **(b)** projection of the SPR shifts found in **(a)** onto the calibration curve of the ultra-thin MIP configuration.

### DETAILED DESCRIPTION OF THE INVENTION

A first object of the invention is a process for manufacturing a plasmonic multimode waveguide sensor comprising the steps of
a) providing a plasmonic multimode waveguide comprising an intermediate buffer layer and a metallic layer coated onto at least part of the intermediate buffer layer, and
b) polymerizing at least one molecularly imprinted polymer on at least part of the surface of the metallic layer of the plasmonic multimode waveguide by photopolymerization.

The process according to the invention allows preparing plasmonic multimode waveguide sensors with ultra-low limits of detection and very high specificity. Furthermore, the process according to the invention allows finely controlling the thickness of the MIP layer and ensures the MIP is preferentially deposited at the most sensitive areas of the waveguide.

Low thicknesses are achievable and the thickness can be controlled, thanks to the enhancement of near-field light within a volume confined to the surface of the metallic layer. This phenomenon is known as the evanescent wave. Consequently, it induces confinement of the polymerization reaction to the metallic surface.

### Process for manufacturing a waveguide sensor

Each of steps a) and b) of the process for manufacturing the plasmonic multimode waveguide sensor may be implemented by any suitable technique known in the art.

In some embodiments, the process comprises, before step a), a step a') of coating the metallic layer onto at least one surface of the plasmonic multimode waveguide. Preferably, the metallic layer is coated onto the intermediate buffer layer.

In some embodiments, the process comprises, before step a'), a step a'') of coating the intermediate buffer layer onto at least one surface of the plasmonic multimode waveguide.

### Plasmonic multimode waveguide

Step a) of the process according to the invention comprises providing a plasmonic multimode waveguide.

*A "plasmonic waveguide"* is a structure that guides electromagnetic waves by exploiting surface plasmon polaritons (SPPs). These are electromagnetic waves that propagate along the interface between a metal and a dielectric material, coupling the electromagnetic field with the collective oscillations of free electrons in the metal. Plasmonic waveguides are of significant interest in nanophotonics due to their ability to confine light to dimensions much smaller than the wavelength of light in free space.

A plasmonic waveguide is said to be *"multimode"* when it guides electromagnetic waves of different wavelengths.

Surface plasmon resonance is an optical phenomenon that derives from the interaction between an electromagnetic wave and the conduction electrons present in a metal element, preferably provided in the form of a thin film, *ie* a film with a thickness of no more than several hundreds of nanometers. Due to the effect of the incident light, the conduction electrons of the metal create oscillations (waves) that propagate in a parallel direction to the metal-dielectric interface. Such plasma waves that propagate are called surface plasmon waves. When at a particular angle, the vector of the incident electromagnetic wave couples with the vector of the plasmon wave the conditions of plasmon resonance arise. This coupling of the incident light with the surface plasmons leads to an attenuation of the intensity of the light reflected by the metal film, which can be measured with high precision.

SPR sensors generally include a conductive layer (metal film), a dielectric layer and a recognition element, which can be formed for example by a layer of a molecularly imprinted polymer.

When a matrix, such as a liquid matrix, containing an analyte is in contact with the molecularly imprinted polymer layer, an equilibrium is established between free analyte molecules in solution and analyte molecules complexed in the polymer's molecular imprints. The molecular fingerprints' recognition of the analyte modifies their refractive index in contact with the metal film, thereby affecting its optical response. Such variation can be measured, for example, in terms of wavelength shift of the reflected wave or attenuation of the intensity thereof.

The plasmonic multimode waveguide used in the process according to the invention can be any plasmonic multimode waveguide.

In some embodiments, the plasmonic multimode waveguide is a fiber optic, especially a Plastic Optical Fiber (POF), preferably comprising a gold nanolayer, or other noble metals or metallic multilayers, as layer able to excite surface plasmon waves, and an intermediate buffer layer, preferably selected from the group consisting of dielectric layers, polymer layers, metal oxide layers, and metal oxide multilayers. POF@Au may be prepared by any suitable techniques. For instance, POF@Au may be prepared as disclosed in EP 3 502 152 and Cennamo et al. Sensors 2011, 11, 11752-11760.

Preferably, the waveguide is a POF having a total diameter ranging from 1 µm to 2000 µm, preferably from 100 µm to 1000 µm. More preferably, the POF has a total diameter of 1000 µm, more specifically a core of 980 µm and a cladding of 10 µm. Preferably, the refractive index of waveguide's core and cladding is 1.49 and 1.41, respectively, in the visible range. The POF is preferably modified by polishing steps in order to achieve a D-shaped POF area with a planar exposed core ready to deposit multilayer.

In the case the plasmonic multimode waveguide is based on modified POF, e.g. a D-shaped POF, the plasmonic waveguide comprises an intermediate buffer layer, between the core of the POF and the subsequent metallic layer, such as a dielectric layer (such as a polymer layer) or metal oxides (such as titanium oxide, TiO₂, or zirconium oxide, ZrO₂) or a multilayer of metal oxides, and finally a metallic layer or a combination of metallic layers on at least one of its surfaces. The MIP is polymerized on at least part of the metallic layer by photopolymerization of a photosensitive formulation, preferably a liquid photosensitive formulation. In some embodiments, the MIP is polymerized on part of the metallic layer. Preferably, the parts of the metallic layer on which the MIP is polymerized include the most sensitive parts of the waveguide sensors.

In some other embodiments, the plasmonic waveguide is a multimode spoon-shaped waveguide as described in Cennamo et al. Biosensors and Bioelectronics 2022, 217, 114707, a non-POF fiber optic, such as a silica fiber, or a microstructure waveguide such as those manufactured by photolithography..

### Intermediate buffer layer

The intermediate buffer layer is a layer with a refractive index major than that of the core of the waveguide. The intermediate buffer layer is deposited on at least part of the surface of the plasmonic multimode waveguide, preferably at least part of the surface of the exposed core of the plasmonic multimode waveguide.

The intermediate buffer layer aims at improving the coupling of light between the metallic layer and the waveguide. The intermediate buffer layer is preferably selected from the group consisting of a dielectric layer, a metal oxide layer and a metal oxide multilayer. Examples of suitable metal oxides include titanium oxide, such as TiO₂, and zirconium oxide, such as ZrO₂. Examples of dielectric layers include photoresist buffer layers.

Preferably, the intermediate buffer layer (between the core and the metal films) is a photoresist buffer layer (e.g., Microposit S1813).

The thickness of the intermediate buffer layer may be comprised between 1 nm and 1500 nm. More preferably, the thickness of the intermediate buffer layer, preferably of the photoresist buffer layer or MOs, is about 1000 nm or 80 nm, respectively. When the intermediate buffer layer changes, the optimized thicknesses change too.

The refractive index of the intermediate buffer layer is major than the waveguide core refractive index in the visible range. More preferably, the refractive index of the intermediate buffer layer, preferably of the photoresist buffer layer, is 1.61 for the Microposit S1813 in the visible range; whereas, in the case of MOs the refractive index in the visible range is 1.63 for the ZrO₂ or 1.79 for the TiO₂.

### Metallic layer

The metallic layer is deposited on at least part of the intermediate buffer layer, preferably on all the intermediate buffer layer.

The metallic layer may be any metallic layer suitable for SPR. The metallic layer may comprise at least one metallic element selected from the group consisting of gold, silver, chromium, copper, titanium, transition metal compounds such as transition metal nitrides, and carbon structures such as graphene.

Preferably, the metallic layer is a gold layer, more preferably a gold nanofilm.

*A "nanofilm"* is a film, or a layer, with a thickness ranging from 1 nm to 100 nm.

The thickness of the metallic layer, preferably of the gold layer, may be comprised between 1 nm and 100 nm. More preferably, the thickness of the metallic layer, preferably of the gold layer, is about 60 nm.

### Molecularly imprinted polymer

*A "molecularly imprinted polymer"* (MIP) is a polymer having specific recognition sites for a target molecule, obtained by synthesizing the polymer in the presence of the target molecule of interest, which acts as a template. MIPs are available for a wide range of target molecules, as they are synthesized in presence of said target molecule.

MIPs are obtained by polymerizing at least one functional (or complexing) monomer with a cross-linking monomer in the presence of a templating molecule, and subsequently removing the template from the polymeric matrix formed. The functional (or complexing) monomer is a monomer having at least one group that can interact specifically with the target molecule and at least one polymerizable functional group.

MIPs are well-known in the art. Examples of MIPs are disclosed in Paruli, E., III; Soppera, O.; Haupt, K.; Gonzato, C. Photopolymerization and Photostructuring of Molecularly Imprinted Polymers. ACS Applied Polymer Materials 2021. DOI: 10.1021/acsapm.1c00661 and in Fuchs, Y.; Soppera, O.; Haupt, K. Photopolymerization and photostructuring of molecularly imprinted polymers for sensor applications-A review. Anal Chim Acta 2012, 717, 7-20. DOI: Doi 10.1016/J.Aca.2011.12.026.

In some embodiments, the polymerization of the at least one MIP is implemented by photopolymerization of a photosensitive formulation comprising suitable monomer(s).

In some embodiments, the photopolymerization is plasmon near-field photopolymerization, which is preferably implemented by injecting light into the plasmonic multimode waveguide.

Photopolymerization of the MIP may be implemented in any conditions, such as light wavelength and duration of the irradiation, suitable for obtaining the desired layer of MIP.

The power density of light is typically comprised between 1 mW/cm² and 50 mW/cm², preferably between 5 mW/cm² and 15 mW/cm², in particular it is about 9 mW/cm².

The irradiation duration is typically comprised between 1 second and 10 minutes, preferably between 3 seconds and 3 minutes. In some embodiments, the irradiation duration is selected from the group consisting of 4 seconds, 7 seconds, 20 seconds, 45 seconds, 1 minute, 1 minute and 30 seconds, 2 minutes and 30 seconds, and 3 minutes.

It is within ordinary skill in the art to select the suitable irradiation time depending among others on the desired MIP thickness, the waveguide, the photosensitive formulation, and the nature and power of the irradiation light.

The irradiation is implemented with a light source, preferably a broadband white light source, that is suitable for exciting the SPR phenomena (the multimode waveguides offer several SPR phenomena via different propagated modes) of the metallic layer, preferably the gold layer. Advantageously, the light is also suitable for triggering photopolymerization. In other words, the absorption wavelength of the photoinitiator is present in the light. In some embodiments, the light is white light.

Implementing the photopolymerization by injecting light directly into the plasmonic multimode waveguide that will constitute the sensor affords numerous advantages. First, the same device is used for manufacturing and using the sensor, thus limiting the need for additional equipment for manufacturing, such as high-cost complex photolithography tools (all-in-one device). In addition, it allows depositing the MIP layer specifically on the most sensitive areas of the waveguide, ensuring a very sensitive detection by the sensor and also limiting the background noise. In addition, MIP layers obtained by *in situ* polymerization are more stable than premanufactured MIP layers that are bound to the metallic layer of the plasmonic waveguide. This allows multiple use of the device after appropriate washing for its regeneration. Finally, it allows finely monitoring the thickness of the deposited MIP layer, especially it allows depositing very thin MIP layers with a finely controlled thickness, which is a key point for increasing sensitivity and selectivity of the sensor and tuning the concentration range of interest.

### Photosensitive formulation

The photosensitive formulation comprises at least one complexing monomer, at least one cross-linking monomer, and at least one photoinitiator.

Complexing monomers are suitable both for polymerizing with each other and/or with cross-linking monomers, and for interacting with the target molecule (or template molecule) of the MIP. Complexing monomers typically organize around the target (or template) molecule, which allows them to take its size and functions (via physical bonds). After polymerization and washing, the target (or template) molecule leaves the recognition site, while the complexing monomers remain in the site because they are crosslinked with the polymer chains.

Examples of complexing monomers include acrylic and/or vinylic monomers, preferably acrylic and/or methacrylic monomers, such as methacrylic acid (MAA).

The cross-linking monomers allow forming the matrix of the polymer. A cross-linking monomer is preferably a molecule having at least two polymerizable functional groups. In some embodiments, the cross-linking monomers are acrylic and/or methacrylic monomers comprising at least two polymerizable functions. Examples of cross-linking monomers include pentaerythritol triacrylate (PETA), ethylene glycol dimethyl acrylate (EGDMA) and any mixture thereof.

The photosensitive formulation may also comprise additional monomers able to polymerize with the complexing monomer(s) and/or the cross-linking monomer(s). Such additional monomers may be suitable for adjusting at least one property of the photosensitive formulation and/or of the polymer to be obtained. In some embodiments, the additional monomer(s) aim at adjusting at least one optical, refractive, mechanical, rheological and/or adhesive property of the photosensitive formulation and/or of the polymer to be obtained. An example of additional monomer is 2,2,2-Trifluoroethyl methacrylate (TFEMA).

Photoinitiators are well-known in the art compounds that generate radical species under irradiation. Photoinitiators are classified in three different categories. In some embodiments, the photoinitiator is a Type I photoinitiator, a Type II photoinitiator or a 3-component or photocyclic photoinitiator. Examples of photoinitiators include bis(cyclopentadienyl)titanium(IV) dichloride (TT), phenylbis(2,4,6-trimethylbenzoyl) phosphineoxide (BAPO) and eosin Y (EY). It is within ordinary skill in the art to select the suitable photoinitiator among others depending on the other components of the photosensitive formulation, the molecular target and the irradiation wavelength.

The photosensitive formulation typically comprises a molecular target corresponding to the analyte that is aimed at being detected by the plasmonic multimode waveguide sensor according to the invention. At this stage, the molecular target acts as a template for forming the MIP.

The molecular target may be any molecule that one desires to adsorb, detect, identify and/or quantify, especially in a liquid matrix or in gaz. Molecular targets include both chemical and biological molecules. Molecular targets include, without being limited to, drugs, colorants, hormones, pesticides and metal ions. The molecular target may be a chiral compound, such as a single enantiomer of a molecule. In solid samples, the target molecule can be extracted into a liquid phase by solvent extraction.

Examples of molecular target include methylene blue, testosterone, per- and polyfluoroalkyl substances (PFAS) such as perfluorooctanoic acid and S-propranolol.

It is within current knowledge of one skilled in the art to determine the appropriate amount of each component of the photosensitive formulation.

The amount of cross-linking monomer(s) is typically in the range of 50 to 90 wt% relative to the total weight of the photosensitive formulation.

The amount of photoinitiator is typically in the range of 0.5 to 3 wt% relative to the total weight of the photosensitive formulation.

The amount of molecular target is typically in the range of 0.1 to 1 wt% relative to the total weight of the photosensitive formulation.

The amount of complexing monomer is typically in the range of 10 to 30 wt% relative to the total weight of the photosensitive formulation.

The complexing monomer: molecular target weight ratio is preferably of at least 10, preferably at least 20, more preferably at least 35. The use of a high complexing monomer: molecular target allows a satisfying and preferably homogeneous repartition of recognition sites in the MIPs.

The photosensitive formulation is preferably a liquid photosensitive formulation.

The photosensitive formulation may further comprise a solvent, such as water. Preferably, the photosensitive formulation does not comprise any solvent.

In some embodiments, the photosensitive formulation is selected from the following formulations:
- TT/EGDMA/methylene blue/PETA/MAA/TFEMA, preferably with the following respective weight percentages: 1.13/21.61/0.23/11.40/19.00/45.50;
- TT/EGDMA/testosterone/PETA/MAA/TFEMA, preferably with the following respective weight percentages: 1.50/20.60/0.56/11.40/20.44/45.50; and
- TT/EGDMA/Propranolol/PETA/MAA/TFEMA, preferably with the following respective weight percentages: 1.46/20.60/0.60/11.39/21.33/44.62.

The process for manufacturing a plasmonic multimode waveguide sensor according to the invention preferably comprises, after step (b), a further step (c) of contacting the plasmonic multimode waveguide sensor obtained at step (b) with a solvent suitable for removing the molecular target, especially the molecular target that is trapped into the MIP. Suitable solvents may include, without limitation, water, alcohols such as ethanol or methanol, acidic solutions such as 10% acetic acid, and any mixture thereof. One skilled in the art Is able to select the suitable solvent based especially on the nature of the target molecule and on the substrate. The solvent and the molecular target are then removed from the plasmonic multimode waveguide.

In some embodiments, the contact of step (c) is implemented for a duration comprised between 30 seconds and 30 minutes, preferably comprised between 4 minutes and 30 minutes, more preferably for a duration of about 10 minutes.

Contacting step (c) may be implemented several consecutive times, such as 2, 3, 4 or 5 times. In some embodiments, all iterations of step (c) are implemented with the same solvent. In other embodiments, the solvent is not the same for all iterations of step (c). For instance, step (c) may be implemented by rinsing 3 times with an acidic solution, preferably a 10% acetic acid solution, and then rising 1 time with water.

The process for manufacturing a plasmonic multimode waveguide sensor according to the invention may be implemented with any photosensitive formulation suitable for producing a MIP, and with any molecular target.

### Plasmonic multimode waveguide sensor coupled with photopolymerized MIP

Another object of the present invention is a plasmonic multimode waveguide sensor comprising:
- a plasmonic multimode waveguide,
- an intermediate buffer layer arranged on at least part of the surface of the plasmonic multimode waveguide,
- a metallic layer arranged on at least part of the intermediate buffer layer, and
- a layer of a molecularly imprinted polymer arranged onto the metallic layer, wherein the thickness of the layer of the molecularly imprinted polymer is lower than 150 nm.

Each of the components of the plasmonic multimode waveguide sensor is as described in the previous sections of the application.

The plasmonic multimode waveguide sensor according to the invention is preferably a D-shaped POF sensor.

The intermediate buffer layer is preferably a photoresist buffer layer or a MOs layer. When the plasmonic multimode waveguide is a fiber, such as a POF, in particular a D-shaped POF, the intermediate buffer layer is preferably between the exposed core of the fiber and the subsequent metallic plasmonic layer.

The metallic layer is preferably a metallic plasmonic nanofilm, preferably a gold nanofilm arranged on at least part of a surface of the intermediate buffer layer.

The layer of molecularly imprinted polymer is preferably arranged by near field photopolymerization onto the metallic layer.

The thickness of the layer of the molecularly imprinted polymer is lower than 150 nm, preferably lower than 100 nm, preferably lower than 75 nm, more preferably comprised between 5 nm and 75 nm, even more preferably comprised between 10 nm and 50 nm. One skilled in the art is able to select the suitable thickness in these ranges based especially on the concentration range that is desired for the sensor.

The thickness of the MIP layer may be selected from the group consisting of about 14 nm, about 18.5 nm, about 28 nm, about 37 nm, about 41.5 nm and about 45 nm.

The thickness may be measured and/or calculated by any suitable method known in the art. In some embodiments, the MIP layer thickness is evaluated from the shift of refractive index before and after photopolymerization, for instance by knowing the refractive index (RI) of the MIP, calculating the variation in resonance wavelength before and after the polymerization at a fixed refractive index of the bulk solution (for instance water, RI=1.332) and knowing the sensitivity of POF@Au, established elsewhere, at S=2000 nm/RIU.

The lower thicknesses of the MIP layer afford lower limits of detection because the analyte is closer to the gold surface, which increases the impact on SPR spectra.

The plasmonic multimode waveguide sensor of the present invention is preferably obtained by a process for manufacturing a plasmonic waveguide sensor according to the invention.

The plasmonic multimode waveguide sensor of the present invention is easy to use as the solid binding of the MIP onto the metallic layer, preferably the gold layer, ensures the possibility to reuse the plasmonic multimode waveguide sensor by simply desorbing the adsorbed analyte, preferably by a simple washing or rinsing process with water. The solvent is preferably selected among solvents able to affect the strength of the physical bonding between the MIP and the molecular target (analyte). In some embodiments, the solvent comprises a weak acid, such as acetic acid, H⁺ ions being suitable for reducing interaction between the analyte and the MIP. Preferably, the weak acid, preferably acetic acid, is used in mixture with water.

The plasmonic multimode waveguide sensor of the present invention may further comprise means for generating an output signal depending on the trapping of the molecular target by the MIP. The output signal may simply be the light exiting from the waveguide.

### Process for controlling the thickness of a MIP layer

Another object of the present invention is a process for controlling the thickness of a MIP layer deposited on at least part of the metallic layer of a plasmonic multimode waveguide. Said process comprises a step of photopolymerization of a photosensitive formulation preferably comprising at least one complexing monomer, at least one cross-linking monomer, and at least one photoinitiator, wherein the photopolymerization is preferably plasmon near-field photopolymerization, implemented by injecting light into the plasmonic multimode waveguide.

The plasmonic multimode waveguide is as described in the above sections.

The thickness of the MIP layer is preferably controlled in the range of 0 to 150 nm, preferably 0 to 100 nm, preferably 0 to 75 nm, more preferably in the range of 5 nm to 75 nm, even more preferably of 10 nm to 50 nm. The thickness range is preferably selected depending on the target molecule concentration that is desired for the sensor.

During the photopolymerization process, the thickness is controlled by adjusting photopolymerization parameters, such as the duration of irradiation, the light power and/or the spectrum of the white light.

The intermediate buffer layer plays an important role in the control of the thickness of the MIP layer.

Another object of the present invention is thus the use of an intermediate layer as defined above, preferably the use of a photoresist buffer layer in a multimode waveguide sensor to ultrafinely control the thickness of a polymer, preferably a MIP, which is photopolymerized on the metallic layer of the multimode waveguide sensor. The intermediate buffer layer improves the plasmonic phenomena and the evanescent field.

In the present invention, the *"thickness of a polymer"* is the mean thickness of a layer or film of said polymer.

### Use of the plasmonic waveguide sensor

Another object of the invention is the use of a plasmonic multimode waveguide sensor according to the invention and/or prepared by a process according to the invention, for adsorbing, detecting, identifying and/or quantifying at least one analyte in a matrix, such as a liquid or gas matrix, preferably a liquid matrix. The analyte typically is or comprises the molecular target or template that was used for preparing the MIP.

Liquid matrices include, without being limited to, wastewater, surface water or groundwater, drinking water, biological fluids such as blood, saliva, sweat and urine, beverages and nonaqueous matrices such as organic solvents.

The concentration of the at least one analyte in the liquid matrix may vary in a wide range, as the sensors according to the invention have been proven to allow detection of analytes in concentrations ranging from the attomolar scale (10⁻¹⁸) to the millimolar scale (10⁻³).

In other words, the invention also relates to a method for adsorbing, detecting, identifying and/or quantifying at least one analyte in a liquid matrix with a plasmonic multimode waveguide sensor according to the invention and/or prepared by a process according to the invention. The method comprises a step of contacting the liquid matrix comprising the at least one analyte with a waveguide sensor according to the invention and/or prepared by a process according to the invention.

The use and/or the method according to the invention may comprise a further step of detecting the signal transmitted by adsorption, detection, identification and/or quantification of the at least one analyte in the liquid matrix with a suitable device.

A last object of the invention is a process for adsorbing, detecting, identifying and/or quantifying at least one analyte in a liquid matrix, comprising the steps of:
a1) providing a plasmonic multimode waveguide sensor coupled with a photopolymerized MIP layer according to the invention,
b1) placing the plasmonic multimode waveguide sensor in contact with the liquid matrix,
c1) detecting at least one output signal transmitted by the plasmonic multimode waveguide sensor, and
d1) detecting, identifying and/or quantifying the at least one analyte in the liquid matrix based on the at least one output signal detected at step c1).

In some embodiments, the plasmonic multimode waveguide sensor according to the invention may be used for adsorbing the analyte(s) present in the liquid matrix, and to separate them therefrom.

In other embodiments, the plasmonic multimode waveguide sensor according to the invention may be used for detecting the presence of the analyte(s) present in the liquid matrix.

According to the present invention, the term "*about*", when relating to a numerical value, refers to an interval centered on this numerical value, and extending of 10%, preferably 5%, more preferably 2%, below and above the numerical value.

According to the present invention, the term *"comprise"* and the terms deriving therefrom, which are open-ended, also include the terms *"consist essentially of"* and *"consist of"* and the terms deriving therefrom.

The invention will also be described in further detail in the following examples, which are not intended to limit the scope of this invention, as defined by the attached claims.

### EXAMPLES

### Example 1. Detection of methylene blue with a sensor according to the invention

### 1.1 Preparation of POF@Au and Instrument Setup for Analysis and Polymerization:

Manufacturing process of the POF@Au is documented in previous works (Cennamo, N.; Massarotti, D.; Conte, L.; Zeni, L. Low Cost Sensors Based on SPR in a Plastic Optical Fiber for Biosensor Implementation. Sensors 2011, 11 (12), 11752-11760).

A plastic optical fiber with a diameter of 1 mm (comprising a polymethyl methacrylate PMMA core of 980 µm and a fluorinated cladding of 10 µm) was mounted on a resin support, then polished with two types of abrasive paper (5 and 1 µm grits) to remove the cladding and part of the core, creating the distinct D-shaped form. A high RI photoresist layer with a RI of approximately 1.6 (Microposit S1813, produced by MicroChem Corp, Westborough, MA, USA) was deposited on the exposed core surface using spin-coating techniques (with a thickness of about 1 µm) to enhance the plasmonic properties. Finally, a 60 nm-thick gold nanofilm was deposited using a sputter coater (Safematic CCU-010, Zizers, Switzerland).

### 1.2 Preparation of the photosensitive formulation of MIP-MB:

The preparation of the F_{MIP} used in this study was adapted from Khitous, A.; Molinaro, C.; Gree, S.; Haupt, K.; Soppera, O. Plasmon-Induced Photopolymerization of Molecularly Imprinted Polymers for Nanosensor Applications. Advanced Materials Interfaces 2023, 2201651 and Khitous, A.; Molinaro, C.; Thomas, C.; Haupt, K.; Soppera, O. Synthesis and Integration of Hybrid Metal Nanoparticles Covered with a Molecularly Imprinted Polymer Nanolayer by Photopolymerization. Sensors 2023, 23 (8), 3995. The F_{MIP} includes Methylene blue (MB) as the molecular target and methacrylic acid (MAA, Sigma-Aldrich) as the complexing agent. The monomers used are pentaerythritol triacrylate (PETA, Sigma-Aldrich), ethylene glycol dimethyl acrylate (EGDMA, Sigma-Aldrich), and 2,2,2-Trifluoroethyl methacrylate (TFEMA, Sigma-Aldrich). Titanocene (TT, Sigma-Aldrich) is used as photoinitiator. The mass percentages (wt%) of the reagents are as follows: (TT/EGDMA/MB/PETA/MAA/TFEMA): 1.13/21.61/0.23/11.40/19.00/45.50.

### 1.3 Near-Field Photopolymerization Study on POF@Au:

First, a drop of F_{MIP} was deposited on POF@Au and rinsed without exposure to irradiation. The corresponding transmission spectra did not show a shift in the SPR band, even after a 5-minute contact. This excludes the presence of significant interactions between F_{MIP} and POF@Au.

Four different MIP configurations were prepared by subjecting F_{MIP} to irradiations of varying durations, maintained at a constant power density of about 9 mW/cm². Irradiation was implemented through the POF.

The irradiation durations used were 1 minute, 1 minute and 30 seconds, 2 minutes and 30 seconds, and 3 minutes. The POF@Au@MIP-MB obtained after these irradiations are respectively referred to as the first, second, third, and fourth configurations. After irradiation, the formulation was carefully rinsed with water and ethanol, then the template extraction was performed by water:acetic acid solution and finally SPR spectra were recorded by considering pure water as encompassing medium. The results of the four configurations are presented in **Figure 1****.**

As shown in **Figure 1****,** in the case of the first configuration (ultra-thin MIP), one minute of irradiation resulted in a 6 nm shift in the SPR band. Increasing the irradiation time, SPR band shifts of 8, 12, and 17 nm were observed for the second, third, and fourth configurations, respectively, which assesses the formation of a polymer layer on the gold surface through plasmon-induced photopolymerization. The thickness of the MIP layer for each configuration was evaluated using the sensitivity of the used POF@Au, and results are provided in **Table 1** below.

**Table 1: Thicknesses of MIP layers for each configuration.**

| Ultra-thin configuration | Thin configuration | Medium thick | Thick configuration |
|---|---|---|---|
| Z₁ | Z₂ | Z₃ | Z₄ |
| 14 nm | 18.5 nm | 28 nm | 37 nm |

### 1.4 Sensitivity study of MB recognition:

After fabrication, POF@SPR@MIP-MB underwent a washing process as detailed above.

Aqueous incubation solutions containing different concentrations of MB were used for MB incubation on POF@Au@MIP-MB, by depositing a 50 µL drop for 10 minutes. Then, POF@Au@MIP-MB was rinsed with pure water and ethanol. Finally, the SPR spectrum was acquired by considering pure water as surrounding medium.

**Figure 2** illustrates the results of MB recognition by the 4 configurations. The SPR band shift confirmed detection of the different concentrations of methylene blue by both configurations.

**Table 2** below summarizes the limit of detection (LOD) obtained for each configuration. The LOD were calculated through a Langmuir model fit of the curve representing the SPR band shift as the methylene blue concentration increases.

**Table 2 - Limits of Detection for each configuration**

| | Configurations | | | |
|---|---|---|---|---|
| | I | II | III | IV |
| LOD | 290.00 aM | 13.90 fM | 193.00 fM | 9.40 pM |

Consequently, methylene blue can be detected in concentrations ranging from 0.29 fM to 500 pM with the device according to the invention.

### 1.5 Selectivity Study of MB Recognition:

Rhodamine 6G (R6G) and Rhodamine 110 (R110) were chosen as interferents due to their close size and structure to that of MB. R6G and R110 were incubated in aqueous solutions at concentrations 100 times higher than that of MB to check if there was significant recognition of these two analogs.

In addition, a non-imprinted polymer (NIP) formulation was prepared. NIP formulation contained the same chemical components used in the MIP but without the molecular target. POF@Au@NIP was manufactured and incubated under the same conditions as POF@Au@MIP-MB. The bare POF@Au was also incubated under the same conditions as POF@Au@MIP-MB to verify whether recognition was due to the creation of recognition sites rather than interaction with gold.

No significant SPR shift was observed for all these comparative tests, assessing the selectivity of MB recognition with the device according to the invention.

### Example 2. Detection of testosterone with a sensor according to the invention

The POF@Au and instrument setup used in the present example are the same as those of example 1 above.

### 2.1 Preparation of the photopolymerizable formulation

The F_{MIP} used in this example comprised testosterone as the molecular target. Other reagents are identical to those of example 1. The mass percentages (wt%) of the different reagents are as follows: (TT/EGDMA/testosterone/PETA/MAA/TFEMA):
1.50/20.60/0.56/11.40/20.44/45.50.

### 2.2 Near-Field Photopolymerization (NFPP) on POF@Au:

The thin MIP film was obtained by covering the active part of the device with a few drops of the formulation and inducing NFPP by irradiation through the POF, as detailed in example 1.

Two configurations were implemented, corresponding respectively to a 45-seconds irradiation, and a 60-seconds irradiation.

In the first configuration, after functionalization, a 12.5 nm red-shift of the POF@Au@MIP SPR band was observed. Increasing the irradiation time to 60 seconds induced a red-shift of the SPR band of 19.5 nm (Figure 3). This confirmed successful polymerization of the MIP on the gold layer.

The MIP thicknesses for the first and second configurations were estimated as 28.4 nm and 45.0 nm, respectively.

### 2.3. Testosterone detection and recognition selectivity evaluation:

Following the integration of the MIP, the POF@Au@MIP was rinsed by depositing a 50 µL drop of an acid solution (acetic acid: H₂O: 1:9) on its surface to release the testosterone trapped in the imprinted sites. The washing time was 10 minutes, and the acid rinse was repeated three times before a final rinse step with pure water.

After this washing step, a 50 µL drop of aqueous solutions containing two different ranges of testosterone, [100 fM to 100 pM] and [10 pM to 50 nM] for the first and second configuration respectively, were deposited on the surface of the two sensors. The incubation time was set at 10 minutes. This time gives a stable, reproducible value. Before measuring the spectra, both sensors were rinsed with pure water and the measurements were then achieved by considering water as surrounding medium. The SPR spectra after each incubation, together with the recognition isotherms, are shown in **Figure 4****.** The SPR band shift confirmed detection of the different concentrations of testosterone by both configurations.

**Table 3** below summarizes the LOD obtained for each configuration. The LOD were calculated through a Langmuir model fit of the curve representing the SPR band shift as the testosterone concentration increases.

**Table 3: Summary of LOD values for the two MIP configurations after incubation in aqueous testosterone solutions.**

| | Configurations | |
|---|---|---|
| | **I (thin)** | **II (thick)** |
| **LOD (pM)** | 0.19 | 8.74 |

From the incubation results, we can conclude that the first configuration has a LOD of 190 fM, while a LOD of 8.74 pM is associated with the second configuration.

Concerning the study of selectivity, three experiments were carried out. The first was to produce a NIP, using the same formulation as MIP but without the presence of testosterone. In the second experiment, estradiol and androstane were used as interferents because of their molecular structure close to that of testosterone.

Incubation of POF@Au@NIP in the concentration range [10 pM - 50 nM] showed no SPR shift.

Secondly, incubation of both analogues at 100 times higher concentrations than testosterone revealed a negligible signal compared with testosterone. This result highlights the selectivity of testosterone detection with the proposed formulations.

### 2.4 Incubation in a different liquid matrix

Finally, in order to simulate real-world detection, POF@Au@MIP was incubated in synthetic saliva, at a pH of 7, at different testosterone concentrations. **Table 4** presents the synthetic saliva composition used in this study.

**Table 4: Simulated saliva used in testing with testosterone (pH: 7).**

| **Chemical** | **Concentration (mM)** |
|---|---|
| Citric Acid | 0.17 |
| NaCl | 88.8 |
| L-cystein | 0.07 |
| L-tryptophan | 0.85 |
| L-histidin | 0.14 |
| L-phenylalanin | 0.16 |

Testosterone present in artificial saliva was incubated on both configurations. Incubation of both devices in artificial saliva containing testosterone shows a shift in the SPR band as a function of testosterone concentration.

As control, the most sensitive configuration (first configuration) was incubated in synthetic saliva, without testosterone, and no SPR shift was observed, indicating that the shifts are attributable to testosterone and not to the presence of the various interferents listed in **Table 4** that make up the artificial saliva. The MIP prepared therefore displays remarkable selectivity.

### Example 3. Detection of (S)-propranolol with a sensor according to the invention

The POF@Au and instrument setup used in the present example are the same as those of example 1 above.

### 3.1 Preparation of the photopolymerizable formulation

The F_{MIP} used in this work consists of S-propranolol (Sigma-Aldrich) as the molecular target and MAA as the complexing agent. The monomers used in this formulation are: PETA, EGDMA and TFEMA. The photoinitiator is (Ti(Cp)₂. The mass percentages (wt%) of the different reagents are as follows: (TT/EGDMA/S-Propranolol/PETA/MAA/TFEMA): 1.46/20.60/0.60/11.39/21.33/44.62.

### 3.2 Near-Field Photopolymerization on POF@Au:

The thin MIP film was obtained by covering the active part of the device with a 50 µL drop of the formulation and inducing NFPP by irradiation through the POF. The thickness was controlled with the irradiation time. To modulate the thickness of polymerized MIP, the irradiation time was chosen with two different values. A first sample was prepared with a 20-second irradiation, while the second configuration was subjected to a 60-second irradiation.

**Figure 5** presents the SPR spectra obtained for both configurations, showing a wavelength shift (6 nm for the 1^{st} configuration, 18 nm for the second configuration), evidencing the successful integration of the MIP layer, with a higher thickness for the second configuration. The 1^{st} configuration provides a 28.4 nm thickness, and the second configuration a 41.5 nm thickness.

### 3.3. POF@Au@MIP washing procedure, S-propranolol detection and recognition selectivity evaluation:

Following the integration of the MIP, the POF@Au@MIP was rinsed by depositing a 300 µL drop of an acid solution (acetic acid: H₂O: 1:9) on its surface. The washing time was 10 minutes, and the acid rinse was repeated three times before a final rinse step with pure water.

After this washing step, 50 µL drops of aqueous solutions containing S-propranolol in two different concentration ranges ([100 attoM-100 fM] and [10 pM-50 nM]) were deposited on both configurations of the POF@Au@MIP. The incubation time was set at 10 minutes. Transmission spectra after incubation are presented on **figure 6****.**

The S-propranolol LOD was calculated for both configurations, and the results are presented in **Table 5** below.

**Table 5: Limits of detection for each configuration**

| | Configurations | |
|---|---|---|
| | **I** | **II** |
| **LOD** | 0.34 fM | 9 pM |

The thinnest MIP layer afforded the most sensitive detection as the detection limit was as low as 0.34 fM.

Specificity was assessed by polymerizing a NIP in the same conditions as those used for the MIP, with the same formulation not comprising S-propranolol. The SPR spectra obtained after incubation did not show any shift of the SPR band, thus assessing the specificity of the binding of S-propranolol to the MIP.

Selectivity was further assessed by comparison with aqueous solutions comprising 5 and 500 fM R-propranolol with both configurations of POF@Au@MIP. No shift of the SPR band was observed.

Selectivity was also demonstrated by using an aqueous solution comprising both S-propranolol and R-propranolol, the concentration of R-propranolol being 100 times higher than that of S-propranolol. The observed red-shift on the SPR spectra corresponded to the concentration of S-propranolol.

### Example 4. Use of a Spoon-Shaped Waveguide (SSW) for S-propranolol detection and recognition selectivity evaluation

The photopolymerizable formulation of example 3 was integrated with a similar process on a different plasmonic multimode waveguide, namely a spoon-shaped waveguide described in Cennamo et al. Biosensors and Bioelectronics 2022, 217, 114707. The MIP was integrated both on the "Neck" area and on the "Bowl" area of the waveguide, with an irradiation time of 4 s and 7 s respectively.

**Figure 7** presents the SPR spectra before and after irradiation. Similarly to the POF waveguide, a shift of the SPR band is observed, assessing the deposition of the MIP layer.

Similar experiments to those disclosed in example 3 assessed the selective detection of S-propranolol in aqueous solutions comprising concentrations of 100 attoM to 1 pM S-propranolol for both configurations.

The LOD of the neck configuration was calculated to be 0.8 fM, and the LOD of the bowl configuration was calculated to be 67 fM.

### Example 5. Detection of Perfluorooctanoic Acid with a sensor according to the invention

The POF@Au and instrument setup used in the present example are the same as those of example 1 above.

### 5.1 Preparation of the photopolymerizable formulation

The F_{MIP} used in this work consists of PFOA (Sigma-Aldrich) as the molecular target, MAA as the complexing agent, two monomers: pentaerythritol triacrylate (PETA, Sigma-Aldrich), ethylene glycol dimethyl acrylate (EGDMA, Sigma-Aldrich), and a photoinitiator (titanocene, Ti(Cp)₂, Sigma-Aldrich) The mass percentages (wt%) of the different reagents are as follows: (PFOA/MAA/TT/EGDMA/PETA): 0.013/0.17/0.56/0.007/0.32/0.49.

### 5.2 Near-Field Photopolymerization on POF@Au:

Different polymerization times were used to generate MIP layers of different thicknesses. The liquid formulation was placed on the gold surface prior to illumination using a white light source (model HL2000-LL, Ocean Insight). By modulating the power with a neutral filter and/or the illumination time, the thickness of the MIP could be modulated in the 13-41 nm range.

**Figure 8** is a schematic representation of the four MIP configurations used in detection, illustrating the control of MIP thickness by irradiation power and time.

SPR spectra were recorded before and after POF functionalization with MIP (POF@MIP) for the four configurations, each prepared according to the irradiation times shown in **Figure 8****.**

**Figure 9** presents the SPR spectra of the SPR platform before and after near-field photopolymerization of the MIP, showing the shift of the SPR band as a function of MIP thickness, labeled as: a) ultra-thin MIP layer, b) thin MIP layer, c) medium thick MIP layer, and d) thick MIP layer.

The SPR shift increases with irradiation time, ranging from 6.5 nm to 18 nm. This red shift indicates the presence of a MIP layer, and the increase in shift with exposure time shows an increase in MIP thickness. Knowing the refractive index of the polymer (1.50) used and the sensitivity of the POF, we estimated the thickness for each configuration **(Table 6)**.

**Table 6: Calculated MIP-PFAS thicknesses for the four configurations manufactured**

| | Illumination time (sec) | Power (mW/cm²) | SPR shift (nm) | MIP thickness (nm) |
|---|---|---|---|---|
| Ultra-thin configuration | 1 | 3 | 6.5 | 13 |
| Thin configuration | 1 | 9 | 9 | 20 |
| Medium thick | 5 | 9 | 13 | 30 |
| Thick configuration | 8 | 9 | 18 | 41 |

**Table 6** shows that MIP thickness increases as a function of irradiation time between 13 and 41 nm.

### 5.3. PFOA recognition sensitivity study

After MIP formation, an acid rinse was applied by depositing a drop of H₂O/acetic acid solution (1:9), 3 times, to extract the trapped PFOA, followed by a final rinse with pure water. Detection of PFOA was performed by placing a drop of the PFOA solution on the sample. Finally, detection was tested on a sample taken in a real environment by incubating POF@Au@MIP in water taken from a river in Mulhouse.

Selectivity was studied in two tests. First, a non-imprinted polymer (NIP) was fabricated to verify the absence of specific recognition. Secondly, structurally similar interferents, Potassium nonafluoro-1-butanesulfonate (KFBS) and Heptafluorobutyric acid (HFBA), were used to test specificity.

Prior to incubation, the POF@MIPs were washed three times in a weak acid solution (methacrylic acid:water, ratio 1:9) for 10 minutes, then a final time with pure water for 10 minutes. After washing, all four configurations showed a red shift, indicating that the recognition sites had indeed been released. This red shift can be explained by the release of PFOA molecules, whose refractive index is lower (1.30) than that of water (1.33). Thus, water replaces PFOA in the recognition sites, increasing the overall refractive index of the MIP and causing a red shift. This result confirms the effectiveness of the recognition site release process.

The washed samples were incubated in aqueous PFOA solutions with different concentrations. After incubation, for all four configurations, a blue shift of the SPR band was observed. This result corresponds to the decrease in the refractive index of the MIP after rebinding **(****Figure 10****).** This blue shift can be explained by the exchange of water molecules in the cavities for PFOA molecules of lower refractive index. Different concentration ranges were used for each sample. For each of the four configurations presented, recognition dynamics were different, depending on polymer thickness.

The spectral shift of the SPR resonance was strongly dependent on polymer thickness. For example, for the thinnest thickness, a linear regime was observed between 0.1 and 10 fM before saturation occured at 10 fM and above. For the thickest thickness, saturation occured at 500 pM. The different incubation kinetics were fitted using a Langmuir model to determine the limits of detection (LOD) and interaction constants for each configuration. These values are summarized in **Table 7.**

**Table 7: Summary of R² (coefficient of determination for the Langmuir model fit), LOD, and K_{aff} for different MIP configurations.**

| | Ultra-thin configuration | Thin configuration | Medium thick | Thick configuration |
|---|---|---|---|---|
| R² | 0.98229 | 0.97403 | 0.97639 | 0.98421 |
| LOD | 53 aM | 7.3 fM | 67 fM | 6.3 pM |
| K_{aff} | 2.49 (fM)⁻¹ | 0.02 (fM)⁻¹ | 2.45 (pM)⁻¹ | 0.01 (pM)⁻¹ |

The thinnest MIP layer has an LOD of 53 aM, demonstrating very high sensitivity for PFOA detection. In addition, changing the thickness of the MIP makes it easy to modulate the LOD. In this way, the sensor can be easily adjusted to address measurements in media containing more or less PFOA.

### 5.4. Recognition selectivity study

To assess recognition selectivity, two methods were adopted. The first involved printing a NIP (Non-Imprinted Polymer) formulation with the same composition as the MIP, but removing the PFOA from the formulation to be polymerized. The responses of the MIP and NIP sensors were then compared.

The second method involved incubating two molecular analogues (HFBA and KFBS) at concentrations 100 times higher than those used for PFOA. The response to these two analogues was compared with that of PFOA.

For PFOA@NIP, a concentration range of 10 fM to 10 pM was used to perform incubations on a thin NIP layer. The results in **Figure 11a** show that no displacement of the SPR band was observed. This indicates that the polymer in the NIP formulation shows no detectable interaction (non-specific recognition), confirming that the PFOA recognition observed with MIP is due to a specific interaction, which is what we are aiming for.

Two molecular analogues of PFOA were tested at concentrations 100 times higher than those used for PFOA on devices designed to recognize PFOA. HFBA has the same molecular function but a shorter fluorinated chain as PFOA, while KFBS has a different function **(****Figure 11****.b**). A summary of the selectivity study is given in **Figures 11****.c-e.** It is remarkable to show that both analogues provided a negligible response with MIP, even at concentrations 100 times higher than the molecule to be detected. This underlines the excellent selectivity of the fabricated MIP. This property makes it possible to quantitatively measure specific PFAS or families of PFAS in mixtures, which is an extremely interesting property for practical applications.

### 5.5. Application of POF@MIP in the detection of PFOA in river water:

The recognition of PFOA was tested in Mulhouse river water at different dilution factors, in order to determine the PFOA concentration. The aim was to illustrate that a rapid, simple and reliable measurement could be obtained on a real sample. The results are shown in **Figure 12****.** Different dilution factors were used to demonstrate measurement consistency. As shown in **Figure 12****.a,** the SPR spectra revealed different SPR shifts as a function of dilution factor. The measured concentrations, as a function of dilutions, are summarized in **Table 8.** In particular the PFAs concentration is determined by multiplying the concentration achieved by the dose/response curve with the corresponding dilution factor.

**Table 8: PFOA concentrations detected in Mulhouse river water as a function of dilution factor.**

| **Label** | **Dilution factor** | \|Δ**λ**\| **[nm]** | **Estimated PFAs concentration (from dose/response curve)** | **Estimated PFAs concentration** |
|---|---|---|---|---|
| A | 1:60000 | 0.7 | 0.24 fM | 14.4 pM |
| B | 1:50000 | 1 | 0.3 fM | 15 pM |
| C | 1:40000 | 1.2 | 0.37 fM | 14.8 pM |
| D | 1:30000 | 1.4 | 0.5 fM | 15 pM |

**Table 8** shows that the concentration of PFOA in the Mulhouse river is 14.8 pM ± 0.25 (~ 60 ng/L). Note that this value complies with the standard of 100 ng/L.

### 5.6. Comparison with different PFOA sensors

The sensor according to the invention was compared to PFOA sensors already listed in the literature **(Table 9). Table 9** shows that the majority of previously developed sensors have LODs in the nano and picomolar ranges.

The sensor according to the invention thus presents a lower LOD. Another major advantage of the sensor according to the invention is that the LOD and measurement range can be easily adapted to the irradiation time during manufacture.

**Table 4: Comparison of LOD and detection dynamics of various PFOA sensors**

| **Year** | **Method** | **Capture Type** | **LOD** | **Experimental Conditions** | **Detection Dynamics** |
|---|---|---|---|---|---|
| **2015** | Molecularly imprinted ultrathin graphitic carbon nitride nanosheets | Electrochemi-luminescence | 24 pM | Water | 24-96 pM |
| | | | | | 120-966 pM |
| **2019** | MIP | photoluminescence | 25 nM | Water | 0.25-15.00 µM |
| **2020**⁵ | Metal-Organic Framework | Impedance | 1.2 pM | Water | 10 pM- 100 nM |
| **2020** | MIP | Electrochemistry | 3.4 pM | River Water | 0.05 - 0.5 nM |
| **2022** | Selective perfluorinated anion exchange ionomer | Electrochemistry | 15 nM | Water Drinking water | 0.77-100 µM |
| **2022** | ssDNA aptamer | Fluorescence | 0.17 µM | Water | 5-50 µM |
| **2023** | MIP | SPR | 1.92 pM | Water | 2.4 pM- 1.8 nM |
| **2023** | MIP | Electrochemistry | 47 pM | seawater | 0,5-10 nM |
| **2024** | self-assembled monolayer | Electrochemistry | 58 pM | Water | 241 pM-12 nm |
| **2024** | Metal-Organic Framework | fluorescence | 3.1 nM | Water | - |
| **2024** | Graphene nanosheet | Impedance | 10.4 nM | Water | 0.05-500.0 µM |
| Present invention | MIP-ONFP | SPR | Controllable LOD: | Water River water | Controllable range: |
| | | | 50 aM | | 100 aM-10 fM |
| | | | 7,3 fM | | 10 fM- 1 pM |
| | | | 67 fM | | 0.1 pM- 50 pM |
| | | | 6.3 pM | | 10 pM-1 nM |

## Claims

1. Process for manufacturing a plasmonic multimode waveguide sensor, comprising the steps of
a) providing a plasmonic multimode waveguide comprising an intermediate buffer layer and a metallic layer coated onto at least part of the intermediate buffer layer, and
b) polymerizing at least one molecularly imprinted polymer layer on at least part of the surface of the metallic layer of the plasmonic multimode waveguide by photopolymerization.

2. Process for manufacturing a plasmonic multimode waveguide sensor according to claim 1, wherein the plasmonic multimode waveguide is a plastic optical fiber, preferably a D-shaped plastic optical fiber.

3. Process for manufacturing a plasmonic multimode waveguide sensor according to claim 1 or claim 2, wherein the photopolymerization is plasmon near-field photopolymerization, implemented by injecting light into the plasmonic multimode waveguide.

4. Process for manufacturing a plasmonic multimode waveguide sensor according to any one of claims 1 to 3, wherein the intermediate buffer layer is selected from the group consisting of a dielectric layer, such as a photoresist buffer layer, a metal oxide layer and a metal oxide multilayer, the metals oxides being preferably TiO₂ and/or ZrO₂.

5. Process for manufacturing a plasmonic multimode waveguide sensor according to any one of claims 1 to 4, wherein the metallic layer is a gold layer, preferably a gold nanofilm.

6. Process for manufacturing a plasmonic multimode waveguide sensor according to any one of claims 1 to 5, wherein the photopolymerization is implemented by photopolymerization of a photosensitive formulation comprising MIP precursors.

7. Process for manufacturing a plasmonic multimode waveguide sensor according to claim 6, wherein the photosensitive formulation comprises at least one complexing monomer, at least one cross-linking monomer, at least one molecular target and at least one photoinitiator.

8. Process for manufacturing a plasmonic multimode waveguide sensor according to claim 7, wherein:
- the at least one cross-linking monomers comprises pentaerythritol triacrylate (PETA), ethylene glycol dimethyl acrylate (EGDMA) or a mixture thereof;
- the at least one complexing monomer comprises methacrylic acid;
- the at least one molecular target comprises methylene blue, testosterone, per- and polyfluoroalkyl substances (PFAS) such as perfluorooctanoic acid or (S)-propranolol; and
- the at least one photoinitiator comprises bis(cyclopentadienyl)titanium(IV) dichloride (TT).

9. Process for manufacturing a plasmonic multimode waveguide sensor according to any one of claims 1 to 8, wherein the photosensitive formulation is selected from the following formulations:
- TT/EGDMA/methylene blue/PETA/MAA/2,2,2 trifluoroethyl methacrylate (TFEMA), preferably with the following respective weight percentages: 1.13/21.61/0.23/11.40/19.00/45.50;
- TT/EGDMA/testosterone/PETA/MAA/TFEMA, preferably with the following respective weight percentages: 1.50/20.60/0.56/11.40/20.44/45.50; and
- TT/EGDMA/Propranolol/PETA/MAA/TFEMA, preferably with the following respective weight percentages: 1.46/20.60/0.60/11.39/21.33/44.62.

10. Process for manufacturing a plasmonic multimode waveguide sensor according to any one of claims 1 to 9, wherein the thickness of the molecularly imprinted polymer layer is lower than 150 nm.

11. Plasmonic multimode waveguide sensor, preferably plastic optical fiber sensor, obtainable, preferably obtained, by a process according to any one of claims 1 to 10.

12. Plasmonic multimode waveguide sensor, preferably plastic optical fiber sensor, comprising a plasmonic multimode waveguide comprising an intermediate buffer layer, a metallic layer coated on at least part of the intermediate buffer layer, and a layer of a molecularly imprinted polymer arranged onto at least part of the metallic layer, wherein the thickness of the layer of the molecularly imprinted polymer is lower than 150 nm.

13. Process for controlling the thickness of a MIP layer deposited on at least part of the metallic layer of a plasmonic multimode waveguide, comprising a step of photopolymerization of a photosensitive formulation preferably comprising at least one complexing monomer, at least one cross-linking monomer, at least one photoinitiator and at least one molecular target, wherein the photopolymerization is preferably plasmon near-field photopolymerization, implemented by injecting light into the plasmonic multimode waveguide.

14. Use of a plasmonic multimode waveguide sensor according to claim 11 or claim 12 for adsorbing, detecting, identifying and/or quantifying at least one analyte in a matrix, wherein the concentration of the at least one analyte in the matrix is preferably comprised between 1 aM and 100 nM.

15. Process for adsorbing, detecting, identifying and/or quantifying at least one analyte in a matrix, preferably a liquid matrix, comprising the steps of:
a1) providing a plasmonic multimode waveguide sensor according to claim 11 or claim 12,
b1) placing the plasmonic multimode waveguide sensor in contact with the matrix,
c1) detecting at least one output signal transmitted by the plasmonic multimode waveguide sensor, and
d1) determining the presence of the at least one analyte in the matrix based on the at least one output signal detected at step c1).
